## Europäisches Patentamt

## European Patent Office

## Office européen des brevets

(11) Publication number: **0 193 978**
**B1**

(12) **EUROPEAN PATENT SPECIFICATION**

(45) Date of publication of the patent specification:
**11.10.89**

(21) Application number: **86200169.0**

(22) Date of filing: **07.02.86**

(51) Int. Cl.⁴: **C25D 13/08**

(54) **Process for incorporating powders into a polymer layer.**

(30) Priority: **07.02.85 NL 8500335**

(43) Date of publication of application:
**10.09.86 Bulletin 86/37**

(45) Publication of the grant of the patent:
**11.10.89 Bulletin 89/41**

(84) Designated Contracting States:
**AT BE CH DE FR GB IT LI NL SE**

(56) References cited:
**DE-A- 2 023 406**
**DE-A- 3 226 278**
**GB-A- 655 763**

(73) Proprietor: **STAMICARBON B.V., Mijnweg 1, NL-6167 AC Geleen(NL)**

(72) Inventor: **Janssen, Leonard Johannes Joseph, van Crieckenbeeklaan 3, NL-5671 ED Nuenen(NL)**
Inventor: **van der Putten, Andreas Martinus TH.P., Hagenkampweg 94, NL-5616 AS Eindhoven(NL)**

ACTORUM AG

## Description

The invention relates to a process for uniformly incorporating powders into electroconductive polymer layers.

It is known in the art how to incorporate powders mechanically into a polymer or polymer-containing compositions. In doing so internal mixers, extruders, mixing rolls and other devices may be used. Of the mixtures thus obtained films can be prepared by rolling. However, in this operation it is necessary for the thickness of the film to be at least greater than or equal to the dimensions of the largest powder particles incorporated. Another disadvantage is that very thin layers of the powder-incorporated polymer have little strength so that in further processing they are apt to become torn. A further disadvantage may be that the powder particles are enclosed completely by the polymer matrix so that the specific properties of the incorporated powders cannot be taken advantage of if such should be desired.

According to another known process the polymer or the polymer-forming substance or substances are dissolved, or are dispersed together with the powder, in a solvent and this mixture is applied to the object that is to be covered with a powder-containing polymer layer. In doing so a brush or roll or spray, among other things, is used in the application. By evaporating the solvent, possibly followed by or with simultaneous polymerization of the polymer-forming substances, a powder-containing polymer layer is formed. This layer often varies strongly in thickness. The powder particles are generally completely surrounded by polymer. Thick layers cannot be properly applied with that process, because, in consequence of the evaporation of the solvent, a continuous film is formed on the surface preventing the layer underneath from hardening.

The German patent publication 2 023 406-A describes a process for the electrodeposition of solid particles and an organic film forming material from aqueous dispersions thereof on an electroconductive substrate that acts as an electrode. This process is an electrophoretic process. In the examples the film-forming material consists of organic polymer, according to the description monomers with one or more aminegroups in the molecule with at least 12 carbon atoms can be used.

The process according to the invention provides the possibility of incorporating powder particles into polymer layers that may be very thin, to a fraction of the dimensions of the powder particles to be incorporated, up to a thickness many times the dimensions of the particles to be incorporated. The essential features of the invention are the subject-matter of present independant claims 1 and 10; preferred features are the subject-matter of dependant claims 2–9.

In patent publication GB 1 424 617 a process is described for depositing a metal layer containing fluorocarbon polymer particles on a substrate by means of electrolysis. This process results in a metal layer in which polymer particles are incorporated.

Monomers capable of forming polymer layers by means of electrolysis are described, inter alia, in Advances in Polymer Science, Fortschritte der Hochpolymeren-Forschung, Volume 9, pp 48-227 (1972), J.W. Breitenbach et al. 'Polymerisations-anregung durch Elektrolyse'.

According to the invention monomers are used that give rise to the formation of conductive polymer layers, because the thickness of these polymer layers may be varied within very wide limits due to the fact that the formation of polymer does not stop as soon as the conductive substrate is completely sealed with the polymer layer, but can be continued for a longer or shorter period as desired, because the flow of electrons responsible for the formation of the polymer is not interrupted by the layer of polymer formed.

Suitable monomers that give rise to the formation of electrically conductive polymer layers include acetylene, pyrrole, methylpyrrole, thiophene, thiazyl and aniline.

The choice of the monomer for the formation of the electrically conductive polymer layer is determined to a considerable degree by the requirements imposed by the use of the polymer layer in which the powder is incorporated. Particularly the medium in and the temperature at which the powder-incorporating polymer layer must be applied constitute major requirements in this connection.

Monomers for the formation of the polymer layers are understood also to comprise low-molecular polymeric (oligomeric) compounds thereof which do not yet behave as separate particles in the medium used as solvent.

For the electrically conductive substrate any conductive material can in principle be used. Examples of such materials are metals, such as iron, titanium, lead, nickel and copper, carbons like graphite, compounds like tungstencarbide and ion-conductive materials, such as ion-exchanging membranes.

The electrically conductive substrate may in principle be of any shape. Depending on the desired use, the person skilled in the art will choose the most desired shape and the most suitable material for the electrically conductive substrate. Thus, preference is given to the flat smooth sheet or cylinder if the powder-containing polymer layer is to be used as such and for this purpose to be removed from the substrate. However, if the object is to obtain an effective surface within the smallest possible volume, a porous, electrically conductive substrate is preferred.

Solvents suitable for the monomer are polar solvents, i.e. solvents in which ions can be formed to take care of the electric conductivity. Particularly suitable are non-aqueous solvents, such as acetonitrile. Suitable ion-supplying electrolytes are salts, acids and bases that are inert, i.e. not used up during the formation of the polymer layer. Depending on the polymerization reaction and the monomer, the person skilled in the art will make his choice from solvent and electrolyte. The electrolysis of a monomer solution also containing electrolyte is carried out in an electrolytic cell of which one of the elctrodes is formed by the electrically conductive substrate and the counterelectrode or electrodes consist of an electronconductive material which is inert under the conditions of the electrolysis. The chosen polarity of the electrodes is such that the polymerization reaction takes place at the desired electrode. The space between the electrodes is filled with the electrolyte-containing monomer solution.

Particularly if the electrode serving as substrate is of a more complicated shape, the use of a plurality of counterelectrodes is to be preferred in order to achieve a homogeneous current distribution. The electrodes of different polarities can be separated from one another if so desired by a diaphragm or ion-exchanging membrane.

By the connection to a voltage source in the external current circuit a current is sent through the electrolytic cell. The current density chosen by the person skilled in the art will be such that a good uniform polymer layer is obtained and no interfering side reactions occur and is generally between 0.1 and 500 A/m², preferably between 0.5 and 200 A/m² and more specifically between 1 and 100 A/m². In some cases the person skilled in the art will prefer to use varying current densities as customary in the electroplating industry.

The time during which the current is sent through the electrolytic cell is chosen in dependence of the desired thickness of the polymer layer and the amperage. The amount of the charge passed through per unit of area determines, in dependence of the starting monomer, the thickness of the polymer layer. Generally a charge of at least 1 Coulomb/m² will have to be passed through, preferably at least 10 C. All this, however depends on the size and the shape of the powder particles that are incoporated into the polymer layer.

For a mechanically proper connection of the powder particle to be incorporated and the polymer layer, the desired ratio of the thickness of the polymer layer: the particle diameter is at least 1 : 10, preferably 1 : 3 and more specifically 1 : 2.

The powder to be incorporated is deposited from the electrolyte-containing monomer solution onto the electrode serving as the electrically conductive substrate for the polymer layer to be formed.

The powder particles can be deposited before as well as during the formation of the polymer layer. To this end the powder particles can be supplied to the electrolyte-containing monomer solution before commencement of the electrolysis and be passed by means of a constant force to the electrode surface before or during the electrolysis and be fixed there. In some cases it is an advantage during the electrolysis to control the addition of the powder particles to the electrolyte-containing monomer solution, so that the concentration of particles in the solution remains constant, or to cause the particles to be formed homogeneously throughout the solution during the electrolysis.

Particles can be caused to be formed homogeneously throughout the solution by reaction between two substances dissolved in the electrolyte-containing monomer solution. Preference is given in this process to applying reactions showing a low velocity, so that the particles formed are small and the rate at which the particles are formed can be kept at a constant value for a longer period of time.

In order to obtain a regular distribution of the powder particles it is necessary for the speed at which the particles are passed to the electrode to be the same over the whole surface and for the applied force used to pass the particles to the electrode to continue to be active also after the particles have reached the surface. The active forces applied may be, inter alia, gravitation, centrifugal or centripetal forces, when the solution and the powder particles show a difference in density, the forces called forth by an electric field if the particles have a net charge and the forces called forth by a magnetic field if the particles show a magnetic behaviour. The lines of the forces called forth should then preferably be perpendicular to the surface of the electrode to which the particles are passed. No incorporation of the powder particles into the film is obtained if other forces are active at the same time causing the pattern of the lines of the forces applied to be so disturbed that the resulting force component parallel to the plane of the electrode exceeds the frictional force, so that transport of the powder particles along the electrode surface occurs. Only in case the resulting force component parallel to the plane of the electrode is of the same magnitude and direction over the whole of the electrode surface averaged over a certain time, can a uniform incorporation into the film yet be effected. As long as the supply of particles is continuous. Such a process, however, is more difficult to control and will make sense only if the residence times of powder particles at the surface of the electrode are long enough to give rise to their incorporation in the polymer layer.

The concentration of the powder particles in the polymer solution can be chosen by the person skilled in the art in dependence of the particle size, the desired concentration of incorporation and the process conditions and is generally between 10 and $10^{20}$ particles/cm³, preferably between $10^2$ and $10^{19}$ and more specifically between $10^3$ and $10^{18}$ particles/cm³.

The particle size depends entirely on the materials chosen and on the desired use. The lower limit is given by the size of the smallest possible metal particles and is about $1.5, 10^{-9}$ m, the upperlimit is in principle non-existant, but will, for practical reasons, usually not be higher than 500μm.

Polymer layers with incorporated powders according to the invention may be applied, inter alia, in coatings of electrodes for electrochemical processes and sensors, as carriers of catalyst particles in chemical processes, in photovoltaic cells, magnetic tapes and electrochromic instruments.

The invention is illustrated by means of the following examples and comparative example.

Example 1

A small gold cylinder so clasped in a cylindrical polytetrafluoroethylene (PTFE) holder that a flat side of the gold cylinder coincides with the flat side of the PTFE cylinder and the cylinder axes of the two coincide is placed with its exposed cylinder surface up in a container fitting round the PTFE cylinder, the gold cylinder can be connected with a current source using a wire at its back. In this container some space has been left having the same diameter as the gold cylinder surface. This space over the cylinder surface, which surface is 0.5 cm², is filled with 500 μl of a carbon/electrolyte/monomer suspension in a solvent, which suspension has been homogenized in an ultrasonic bath for 5 minutes. Opposite the gold cylinder surface a platinum counterelectrode of the same dimensions is placed at the top of the liquid column. In the cell thus formed the carbon particles are passed under the influence of gravitation to the gold surface and fixed there. Subsequently, the electric current is switched on. According to this process the following compositions of electrolyte-containing monomer solutions with carbon suspended therein are treated:

Experiment 1

The suspension contains 0.1 molar LiClO₄, 1 % (vol) pyrrole in acetonitrile and 500 mg/litre activated carbon of the firm of Norit, grade BRX. The current is regulated at a constant anode voltage of 800 mV in respect of a saturated calomel electrode. The current is interrupted after 12 mC has passed. The amount of current passed through corresponds with a thickness of 0.1 μm of the polypyrrole layer formed.

A visual inspection of the film shows that the carbon powder is incorporated in the film and regularly distributed. The adhesion of the particles and the strength of the film are such that the film-covered electrode can be utilized in very strongly agitated solutions.

Experiment 2

The same suspension as in experiment 1 is subjected for 10 minutes to an electrolytic current of 1 mA. A very homogeneous distribution of the carbon particles in the polypyrrole layer is obtained.

Experiment 3

Under the circumstances of experiment 2 a polypyrrole layer containing carbon particles is formed. The Norit BRX carbon particles are impregnated with 20 % (wt) ferrous phthalocyanine.

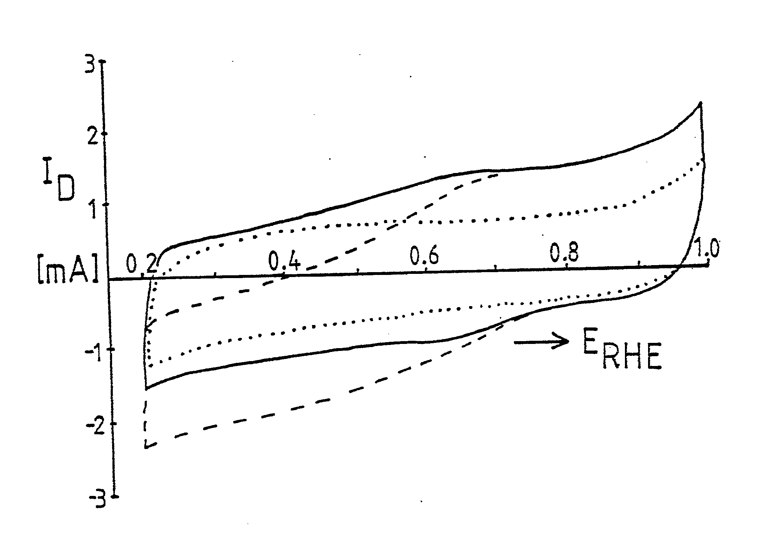

Of the gold electrode covered with a polypyrrole layer containing carbon particles, obtained according to experiment 2 and experiment 3, a cyclovoltammogramme is taken (figure 1) in an oxygen-free 1 N H₂SO₄ solution in water. The curve drawn is characteristic of the electrode covered with a film according to experiment 2, the broken line is characteristic of the electrode according to experiment 3. The dotted curve is characteristic of the electrode covered with a polypyrrole film which has no powder incorporated in it.

The differences between these curves clearly show that the carbon provides an effective increase of the electrode surface and the Fe-phthalocyanine impregnated in the carbon is exposed also on the surface of the polymer layer. The fact that the Fe-phthalocyanine retains its (electro)catalytic properties in the process becomes evident when oxygen is dissolved in the 1 N sulphuric acid solution and a current-voltage curve is taken.

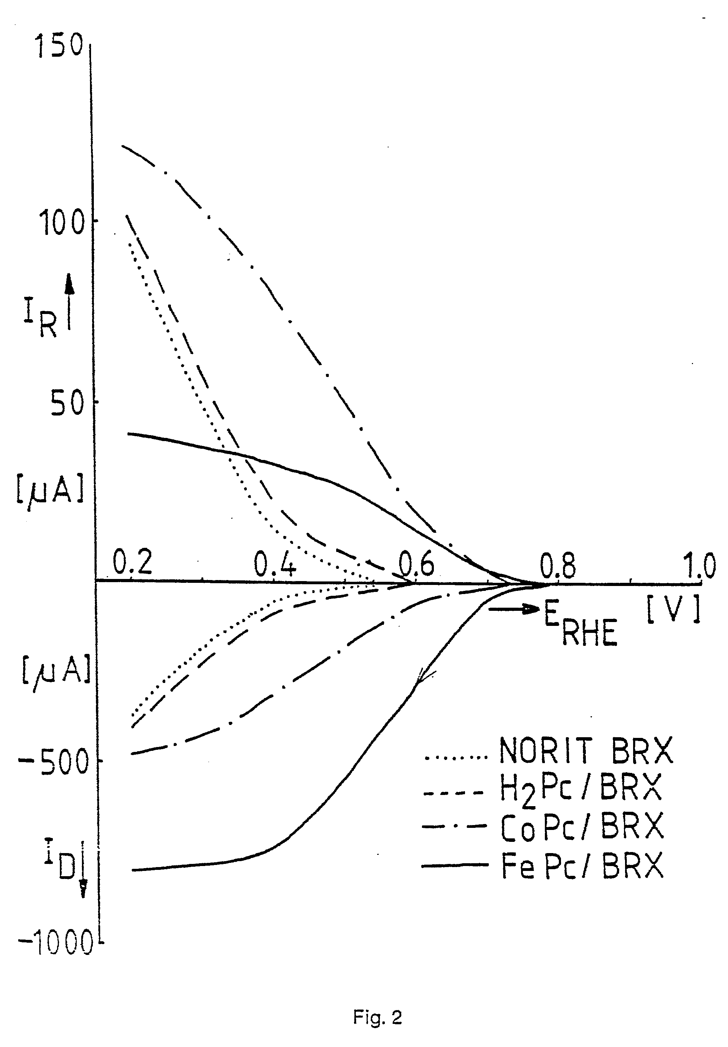

Figure 2 shows that the electrode covered with a polypyrrole layer in which Fe-phthalocyanine impregnated carbon particles are incorporated shows a far greater activity for the reduction of the oxygen than an electrode covered with a polypyrrole layer in which untreated carbon particles are incorporated. Instead of Norit BRX any other kind of carbon can be incorporated. If the carbon is impregnated with other substances, such as phthalocyanine or cobalt-phthalocyanine, comparable results are obtained. Measurements in which the electrodes of experiments 2 and 3 are used as a disc electrode in a rotating ring-disc electrode show that about 2/3 of the exposed surface consists of incorporated powder.

Comparative example A

The cylindrical polytetrafluoroethylene (PTFE) holder with the gold cylinder from example 1 is now used as rotating electrode that can rotate freely in a beaker filled with a suspension of the composition from experiment 1 of example 1. Owing to the rotation of the electrode, the suspension is agitated, upon which there will be a constant flux of solution and suspended particles moving to the electrode. The magnitude of this flux depends on the speed of rotation of the electrode (the gold cylinder turns round its axis in the process).

Experiment 4

Subsequently, an electrolytic current is applied corresponding with that of experiment 1. After a 12 mC charge has passed, the current is interrupted. On a visual inspection the polymer film formed on the surface of the gold electrode is found to contain hardly any carbon particles.

This result can be accounted for by the fact as soon as the powder particles have reached the electrode, these paticles are subjected with the solution to a centrifugal force so that they are carried off immediately along the electrode surface.

Experiment 5

To the suspension sodium toluene sulphonate (1 mM/litre) is supplied. As a result the carbon particles will have a net negative charge, so that in the direct vicinity of the electrode they will be attracted under the influence of the electric field applied. Experiment 4 is repeated. Again hardly any carbon particles are found to be incorporated in the polymer layer. The applied force by which the particles are permanently drawn to the electrode surface is

apparently too small to generate such a frictional force as will be capable of compensating the centrifugal force resulting from the rotation.

In experiments 4 and 5 the rotational frequency of the electrode was 16 s⁻¹.

## Example II

In an electrolytic cell in which on the bottom a polished flat electrode with opposite at a distance of 0.5 cm a platinum gauze electrode functioning as counterelectrode. The cell is filled with a suspension of a powder (1.33 g/litre) in a solution containing 0.1 mole/LiClO₄/litre and 1 % (vol) pyrrole. The suspension has been subjected to ultrasonic homogenization. The electrolytic current is set at 20 A/m², with the polished electrode being connected as anode, the current is interrupted after 1 hour. During the electrolysis the suspension is agitated very uniformly and calmly as a result of the gas formed on the counterelectrode, so that in the course of time a constant deposition of the powder present in the suspension is achieved. After 1 hour a polymer layer about 0.1 mm thick has been formed. The following experiments were made according to this example.

|  | powder | solvent | Electrically conductive substrate |
|---|---|---|---|
| exp. 6 | FeCeO₃ | acetonitrile | graphite |
| exp. 7 | PbO₂ | acetonitrile | Ti |
| exp. 8 | CdS | acetonitrile | Pt |
| exp. 9 | azoxytoluene | water | Pt |

The powders in experiments 6 and 7 had a particle size 25 μm. CdS was prepared by addition of an 0.1 M CdNO₃ solution to a solution of 0.1. M Na₂S in water, the deposit was filtered off, washed with water, dried and ground to fineness in a mortar. The azoxytoluene was a trade product and was ground to fineness in a mortar also.

The films formed in these experiments were examined in the following manner.

### Experiment 6

The colour of the polypyrrole film is found to be reddish brown. After removal of the film from the substrate, the surface is studied under a light microscope. On the surface red particles are found to be present, uniformly distributed.

A cross section of the layer shows that throughout the film red particles are present.

By means of an electron probe microanalysis the distribution of the FeCeO₃ over the thickness of the polymer layer was determined at intervals of

10μm. Within the layer the composition was found to be very constant.

### Experiment 7

The solution in the electrolytic cell was replaced by 0.5 M sulphuric acid in water and the electrode covered with the polymer layer was connected as cathode for a few minutes.

After this, using a microscope, glittering islets are now visible in the reddish brown polymer layer. After removal from the substrate, the polymer layer is treated with concentrated nitric acid. The resulting solution is evaporated and subsequently 100 ml 0.1 M hydrochloric acid is added, upon which the resulting solution is subjected to a polarographic analysis. The polarogramme shows two waves, one of which can be attributed to the presence of lead.

### Experiment 8

The film removed from the substrate is found on microscopic examination to contain small yellow particles on the surface and throughout the thickness.

By means of the electron microprobe analysis Cd is demonstrated.

### Experiment 9

Using the microscope, small white grains can be observed throughout the thickness of a cross section of the polymer film removed from the substrate.

### Example III

In the cell of example II a suspension of PbO₂ (1.33 g/litre) is brought into an aqueous solution of 2 M HCl and 1 M aniline. The electrically conductive substrate is gold. The electrolytic current is set at 20 A/m².

The current is interrupted when the polymer layer formed is about 1 μm. thick.

The film formed has a deep brown colour, unlike a film of polyaniline only, which is green.

By means of an electron probe microanalysis the presence of lead is demonstrated on the polymer layer after the latter has been thoroughly washed and subsequently dried.

### Example IV

In the realization of example III thiophene is now dissolved instead of aniline.

An analysis with the electron microprobe again demonstrates the presence of lead on the polymer film.

In example III as well as IV the film on the substrate is analysed after thorough washing and drying.

### Claims

1. Process for the production of a polymer film incorporating solid particles by electrodeposition of the polymer film on an electroconductive substrate that functions as an electrode in the presence of a dispersion of solid particles, characterized in that the polymer film is obtained from a solution of monomer capable of forming an electroconductive polymer by electrolysis.

2. Process according to claim 1, characterized in that the solid particles are deposited on the electroconductive substrate under the influence of a force chosen from the group of gravitation, a centrifugal or centripetal force, a force called forth by a magnetic field, or a combination of two or more of these forces.

3. Process according to any one of claims 1 to 2, characterized in that the solid particles are replenished in the solution during the formation of the polymer layer.

4. Process according to claim 3, characterized in that the solid particles are formed in the solution during the formation of the polymer layer.

5. Process according to claim 1, characterized in that the monomer used is chosen from acetylene, pyrrole, thiophene, thiazyl or aniline.

6. Process according to any one of claims 1 to 5, characterized in that the incorporated particles have catalytic properties.

7. Process according to claim 6, characterized in that the particles are incorporated substantially at the exposed surface of the polymer film.

8. Process according to any one of claims 1 to 7, characterized in that the electrically conductive substrate is formed by a metal, carbon or an ion-conductive material.

9. Process according to any one of claims 1 to 8, characterized in that the thickness of the polymer layer is at least one thenth of the diameter of the particles.

10. Products comprising polymer layers with incorporated powder particles according to the process of any one of claims 1–9.

## Patentansprüche

1. Verfahren zum Herstellen eines Polymerfilms, der durch elektrolytische Fällung des Polymerfilms auf ein elektrisch leitendes Substrat, das als Elektrode wirkt, in Anwesenheit einer Dispersion von festen Teilchen feste Teilchen einverleibt aufweist, dadurch gekennzeichnet, daß der Polymerfilm aus einer Lösung eines Monomers, das ein elektrisch leitendes Polymer bilden kann, durch Elektrolyse erhalten wird.

2. Verfahren nach Anspruch 1, dadurch gekennzeichnet, daß die festen Teilchen auf das elektrisch leitende Substrat unter dem Einfluß einer Kraft ausgewählt aus der Gruppe Gravitations-, Zentrifugal- oder Zentripetalkraft, einer durch ein Magnetfeld ausgelösten Kraft oder einer Kombination von zwei oder mehreren dieser Kräfte abgeschieden werden.

3. Verfahren nach einem der Ansprüche 1 bis 2, dadurch gekennzeichnet, daß die festen Teilchen in der Lösung während der Bildung der Polymerschicht ergänzt werden.

4. Verfahren nach Anspruch 3, dadurch gekennzeichnet, daß die festen Teilchen in der Lösung während der Bildung der Polymerschicht gebildet werden.

5. Verfahren nach Anspruch 1, dadurch gekennzeichnet, daß das gewählte Monomer aus Acetylen, Pyrrol, Thiophen, Thiazyl oder Anilin gewählt wird.

6. Verfahren nach einem der Ansprüche 1 bis 5, dadurch gekennzeichnet, daß die einverleibten Teilchen katalytische Eigenschaften aufweisen.

7. Verfahren nach Anspruch 6, dadurch gekennzeichnet, daß die Teilchen im wesentlichen an der exponierten Oberfläche des Polymerfilms einverleibt werden.

8. Verfahren nach einem der Ansprüche 1 bis 7, dadurch gekennzeichnet, daß das elektrisch leitende Substrat aus einem Metall, Kohlenstoff oder einem ionenleitenden Material besteht.

9. Verfahren nach einem der Ansprüche 1 bis 8, dadurch gekennzeichnet, daß die Dicke der Polymerschicht mindestens ein Zehntel des Durchmessers der Teilchen beträgt.

10. Produkte umfassend Polymerschichten mit einverleibten Pulverteilchen nach dem Verfahren eines der Ansprüche 1 bis 9.

## Revendications

1. Procédé de production d'une pellicule de polymère contenant des particules solides par électrodéposition de la pellicule de polymère sur un substrat conducteur d'électricité qui fonctionne à la façon d'une électrode en présence d'une dispersion de particules solides, caractérisé en ce qu'on obtient la pellicule de polymère à partir d'une solution de monomère capable de former par électrolyse un polymère conducteur de courant.

2. Procédé selon la revendication 1, caractérisé en ce qu'on dépose les particules solides sur le substrat conducteur de courant sous l'effet d'une force de gravitation, une force centrifuge ou une force centripète, force qui est provoquée par un champ magnétique ou une combinaison de deux ou plusieurs de ces forces.

3. Procédé selon la revendication 1 ou 2, caractérisé en ce que l'on réapprovisionne la solution en particules solides pendant la formation de la couche de polymère.

4. Procédé selon la revendication 3, caractérisé en ce qu'on forme les particules solides dans la solution pendant la formation de la couche de polymère.

5. Procédé selon la revendication 1, caractérisé en ce que le monomère utilisé est choisi parmi l'acétylène, le pyrrole, le thiophène, le thiazyle ou l'aniline.

6. Procédé selon l'une quelconque des revendications 2 à 5, caractérisé en ce que les particules incorporées ont des propriétés catalytiques.

7. Procédé selon la revendication 6, caractérisé en ce qu'on incorpore les particules sensiblement à la surface exposée de la pellicule de polymère.

8. Procédé selon l'une quelconque des revendications 1 à 7, caractérisé en ce que le substrat conducteur de courant est en un métal, en carbone ou en une matière conductrice d'ions.

9. Procédé selon l'une quelconque des revendications 1 à 8, caractérisé en ce que l'épaisseur de la couche de polymère est d'au moins un dixième du diamètre des particules.

10. Produit comprenant des couches de polymère qui contiennent des particules de poudre incorporées selon le procédé de l'une quelconque des revendications 1 à 9.

Fig. 2